**Europäisches Patentamt**

**European Patent Office**

**Office européen des brevets**

(19)

(11) Veröffentlichungsnummer : **0 355 938 B1**

(12) # EUROPÄISCHE PATENTSCHRIFT

(45) Veröffentlichungstag der Patentschrift :
**11.03.92 Patentblatt 92/11**

(51) Int. Cl.$^5$ : **F24D 19/06, F28D 1/03**

(21) Anmeldenummer : **89250003.4**

(22) Anmeldetag : **14.07.89**

(54) **Plattenheizkörper mit Umrahmung.**

(30) Priorität : **03.08.88 DE 8810045 U**

(43) Veröffentlichungstag der Anmeldung :
**28.02.90 Patentblatt 90/09**

(45) Bekanntmachung des Hinweises auf die
Patenterteilung :
**11.03.92 Patentblatt 92/11**

(84) Benannte Vertragsstaaten :
**AT BE CH DE FR GB IT LI NL**

(56) Entgegenhaltungen :
**CH-A- 430 113**
**DE-A- 2 903 124**
**DE-A- 3 420 258**

(73) Patentinhaber : **KERMI GmbH**
**Pankofen 54**
**W-8350 Plattling (DE)**

(72) Erfinder : **Heigl, Adolf**
**Am Moosbuckl 1**
**W-8499 Trebersdorf (DE)**

(74) Vertreter : **Kaiser, Henning**
**Preussag AG, Patente und Lizenzen, Postfach**
**15 12 27, Kurfürstendamm 32**
**W-1000 Berlin 15 (DE)**

## Beschreibung

Die Erfindung betrifft einen Plattenheizkörper mit Umrahmung und wenigstens einer Heizplatte, wobei die Umrahmung aus Profilen besteht, die auf die Kanten der Heizplatte aufgesteckt werden.

Derartige Umrahmungen oder Verkleidungen (vgl. DE-A-2 903 124), die auf die Kanten eines Plattenheizkörpers aufgesteckt werden, sind üblicherweise Blechteile, die als Stanz-Biegeteile ausgeführt werden, wodurch sich eine relativ eckige und kantige Form ergibt, die eingeschränkte Reinigungsmöglichkeiten und eine gewisse Verletzungsgefahr mit sich bringen können. Außerdem werden bei bisher bekannten Umrahmungen für Plattenheizkörper, die aus zwei geprägten Halbschalen mit zwischen Sicken gebildeten Wasserführungskanälen zusammengesetzt sind, lediglich die äußeren Kanten abgedeckt. Derartige Heizkörperabdeckungen stehen außerdem im allgemeinen nur in einem schlechten Wärmekontakt mit dem Heizkörper.

Aufgabe der Erfindung war es daher, Plattenheizkörper mit einer Umrahmung zu schaffen, die in einem guten Wärmekontakt zum Heizkörper steht und eine gute Reinigungsmöglichkeit bei geringster Verletzungsgefahr und ansprechender äußerer Form bieten. Die Lösung dieser Aufgabe ist im Anspruch 1 angegeben. Die Ansprüche 2 und 3 beschreiben zweckmäßige Weiterbildungen der Erfindung.

Der erfindungsgemäße Plattenheizkörper mit Umrahmung weist längliche Hohlprofile auf, die auf die Kanten des Plattenheizkörpers aufgesteckt werden. Die an den seitlichen Kanten des Plattenheizkörpers aufgesteckten Hohlprofile sind etwa winkelförmig, um als Sichtblende die hinter dem Plattenheizkörper liegenden Armaturen beziehungsweise weiteren Heizplatten gegen Einsicht abzudecken. Hierdurch wird außerdem die abstrahlende Heizfläche zu den Heizkörperschmalseiten hin vergrößert. Bei Plattenheizkörpern mit waagerecht angeordneten Wasserführungskanälen greifen speziell die seitlich aufgesteckten Hohlprofile so weit über die Heizplatte, daß auch die senkrechten Wasserführungskanäle weitgehend von den aufgesteckten Profilen abgedeckt sind. Da die Profile großflächig an der Vorderseite der Heizplatte auf den Wasserführungskanälen aufliegen und auch an der Rückseite der Heizplatte über den Wasserführungskanal greifen, ist für einen guten Wärmekontakt zwischen der Heizplatte und den Profilen gesorgt. Durch die Breite der Profile wird außerdem auch die nach vorn abstrahlende Fläche vergrößert. Dazu ist der eine Schenkel des Winkels zur Verkleidung der Heizkörperschmalseiten als etwa U-förmiges Teil ausgeführt, wobei der eine der beiden parallelen Schenkel des U-förmigen Querschnittes, der auf der Sichtseite des Plattenheizkörpers liegt, eine der abzudeckenden Breite des Heizkörpers entsprechende Länge aufweist und der zweite entsprechend der auf der Rückseite der Heizplatte angebrachten Armaturen oder zweiten Heizplatte kürzer gestaltet ist. In einer speziellen Ausführung kann auch vorgesehen werden, die etwa trapezförmigen Schmalseiten der in die Heizplatte eingeprägten Sicken abzudecken und dadurch eine Sichtfläche beziehungsweise Wärme abstrahlende Fläche zu schaffen, die im wesentlichen nur in einer Richtung strukturiert ist.

Die auf die obere oder untere Kante des Plattenheizkörpers aufgesteckten Hohlprofile weisen einen etwa U-förmigen Querschnitt auf, wobei die parallelen Schenkel des U-förmigen Querschnittes etwa gleich lang sind und insbesondere der auf der Frontseite der Heizplatte liegende Schenkel etwa die gleiche Länge hat wie der längere Schenkel des U-förmigen Abschnittes des seitlich aufgesteckten Profils.

In einer speziellen Ausführung des erfindungsgemäßen Plattenheizkörpers mit Umrahmung sind die Sichtkanten und Ecken der länglichen Hohlprofile abgerundet, insbesondere etwa viertelkreisförmig ausgeführt, wobei der Radius etwa der halben Dicke der Heizplatte entspricht.

In einer weiteren speziellen Ausführung des erfindungsgemäßen Plattenheizkörpers mit Umrahmung werden die aufgesteckten Hohlprofile mit Eckverbindern verbunden, die bündig an die Hohlprofile anschließen, insbesondere auch in die Hohlprofile eingesteckt sind und deren Querschnitte in den Richtungen senkrecht zu den Längsachsen der angrenzenden Hohlprofile jeweils der äußeren Umrandung des Hohlprofilquerschnittes entsprechen. Zusätzlich zu der Steckverbindung zwischen Hohlprofilen und Eckverbindern können geeignete Befestigungsmittel etwa senkrecht zu den Längsachsen der Hohlprofile in die in die Hohlprofile hineinragenden Abschnitte der Eckverbinder eingebracht sein.

Die vorgesehenen Plattenheizkörper mit Umrahmung bieten eine gute Reinigungsmöglichkeit, geringe Verletzungsgefahr, gute Montierbarkeit und Demontierbarkeit, eine ansprechende äußere Form und vergrößern zusätzlich bei Verwendung eines gut wärmeleitenden Materials für die länglichen Hohlprofile die abstrahlende Heizfläche des Plattenheizkörpers. Ein bevorzugtes Ausführungsbeispiel des erfindungsgemäßen Plattenheizkörpers mit Umrahmung wird anhand der schematischen Darstellungen erläutert.

Es zeigen

Fig. 1 einen horizontalen Schnitt durch den erfindungsgemäßen Plattenheizkörper mit Umrahmung und

Fig. 2 einen vertikalen Schnitt durch einen Plattenheizkörper mit Umrahmung.

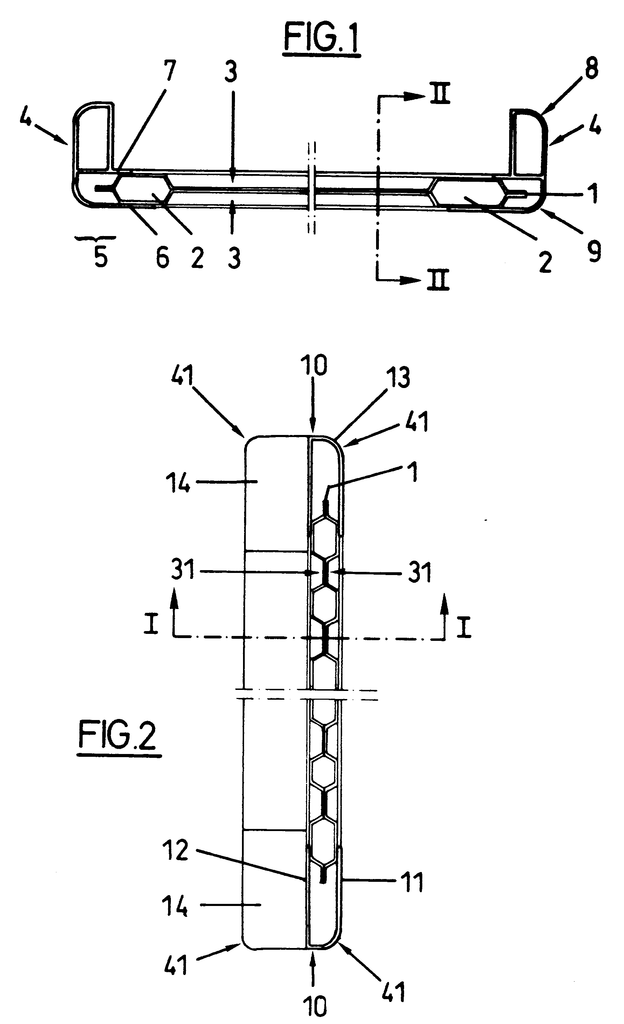

Fig. 1 zeigt einen waagerechten Schnitt durch einen Plattenheizkörper 1 mit senkrechten Wasserführungskanälen 2, eingeprägten Sicken 3 und seitlich aufgesteckten winkelförmigen Hohlprofilen 4. Einer der Schenkel des Winkels ist als U-förmiger Abschnitt 5 ausgeführt, wobei der eine Schenkel 6 der beiden parallelen Schenkel 6, 7 des U-förmigen Abschnittes 5 den senkrechten, wasserführenden Kanal 2 weitgehend abdeckt.

In einer speziellen Ausführung ist die Länge des Schenkels 6 so bemessen, daß auch die schräg zur Mittelfläche des Plattenheizkörpers 1 weisenden, etwa trapezförmigen Flächen der Sicken 3 abgedeckt werden. Die Sichtkanten 8, 9 des Hohlprofils 4 sind etwa viertelkreisförmig abgerundet.

Fig. 2 zeigt einen senkrechten Schnitt (II) durch einen Plattenheizkörper 1 mit waagerechten Sicken 31 und auf Ober- und Unterkante aufgesteckten Hohlprofilen 10. Die Hohlprofile 10 haben einen etwa U-förmigen Querschnitt, wobei die parallelen Schenkel des U-förmigen Querschnittes etwa gleich lang sind. Die Sichtkanten 13 des Hohlprofils 10 sind etwa viertelkreisförmig abgerundet. Die Ecken 41 der Eckverbinder 14 sind etwa sind etwa achtelkugelförmig abgerundet.

## Patentansprüche

1. Plattenheizkörper mit Umrahmung und wenigstens einer Heizplatte, wobei die Umrahmung aus Profilen besteht, die auf die Kanten der Heizplatte aufgesteckt werden, dadurch gekennzeichnet, daß die Profile als längliche Hohlprofile (4, 10) ausgeführt sind, wobei die Hohlprofile (4) für die Abdeckung der seitlichen Kanten des Plattenheizkörpers etwa winkelförmig sind und ein Schenkel (5) des Winkels zum Aufstecken auf die Heizplatte (1) einen etwa U-förmigen Querschnitt mit parallelen Schenkeln (6, 7) aufweist und die Hohlprofile für die Abdeckung der oberen und unteren Kante des Plattenheizkörpers zum Aufstecken auf die Heizplatte (1) einen U-förmigen Querschnitt mit parallelen Schenkeln (11, 12) aufweisen.

2. Plattenheizkörper mit Umrahmung nach Anspruch 1, dadurch gekennzeichnet, daß die Sichtkanten (8, 9, 13) der länglichen Hohlprofile (4, 10) etwa viertelkreisförmig abgerundet sind, insbesondere in einem Radius, der etwa der halben Dicke der Heizplatte (1) entspricht.

3. Plattenheizkörper mit Umrahmung nach Anspruch 1 oder 2, dadurch gekennzeichnet, daß die länglichen Hohlprofile (4, 10) mit in die Hohlprofile (4, 10) einsteckbaren Eckverbindern (14) bündig anschließend verbunden sind, deren Querschnitt, bezogen auf die Längsachse der Hohlprofile (4) für die Abdeckung der seitlichen Kanten des Plattenheizkörpers, winkelförmig entsprechend der äußeren Kontur des Querschnittes dieser winkelförmigen Hohlprofile (4) gestaltet ist und deren Querschnitt, bezogen auf die Längsachse der Hohlprofile (10), für die Abdeckung der oberen und unteren Kante des Plattenheizkörper entsprechend der äußeren Kontur des Querschnittes dieser Hohlprofile (10) gestaltet ist und deren Ecken (41) entsprechend den Abrundungen der länglichen Profile abgerundet sind.

## Claims

1. Panel-type radiator with a frame and at least one heating panel, the frame comprising profiles which are slipped over the edges of the heating panel, characterised in that the profiles are elongate hollow profiles (4, 10), the hollow profiles (4) being substantially angular for covering the lateral edges of the panel-type radiator, and one arm (5) of the angle has a substantially U-shaped cross-section with parallel arms (6, 7) for slipping over the heating panel (1), and the hollow profiles for covering the upper and lower edges of the panel-type radiator having a U-shaped cross-section with parallel arms (11, 12) for slipping over the heating panel (1).

2. Panel-type radiator with a frame according to claim 1, characterised in that the visible edges (8, 9, 13) of the elongate hollow profiles (4, 10) are rounded in a subtantially quadrant-like manner, more especially with a radius which corresponds substantially to half the thickness of the heating panel (1).

3. Panel-type radiator with a frame according to claim 1 or 2, characterised in that the elongate hollow profiles (4, 10) are connected to corner connectors (14) in a flush manner, said corner connectors being insertable into the hollow profiles (4, 10) and having a cross-section which is angular, relative to the longitudinal axis of the hollow profiles (4) for covering the lateral edges of the panel-type radiator, so as to correspond to the outer configuration of the cross-section of these angular hollow profiles (4), and having a cross-section which is shaped relative to the longitudinal axis of the hollow profiles (10), for covering the upper and lower edges of the panel-type radiator in accordance with the outer configuration of the cross-section of these hollow profiles (10), and said corner connectors having corners (41) which are rounded so as to correspond to the rounded portions of the elongate profiles.

## Revendications

1. Radiateur à plaques comportant un encadrement et une ou plusieurs plaques chauffantes, l'encadrement se composant de profilés qui sont emboîtés sur les bords de la plaque chauffante, caractérisé en ce que les profilés sont réalisés sous la forme de profilés creux oblongs (4, 10), les profilés creux (4) prévus pour couvrir les bords latéraux du radiateur à plaques ayant une forme sensiblement coudée et une branche (5) du coude destiné à s'emboîter sur la plaque chauffante (1) présentant une section transversale sensiblement en forme de U formée de branches parallèles (6, 7), tandis que les profilés creux prévus pour couvrir les bords supérieur et inférieur du radiateur à plaques présentant, en vue de s'emboîter sur la plaque chauffante (1), une section transversale en forme de U formée de branches parallèles (11, 12).

2. Radiateur à plaques comportant un encadrement, selon la revendication 1, caractérisé en ce que les bords visibles (8, 9, 13) des profilés creux oblongs (4, 10) sont arrondis en formant approximativement un quart de cercle, notamment suivant un rayon correspondant sensiblement à la moitié de l'épaisseur de la plaque chauffante (1).

3. Radiateur à plaques comportant un encadrement, selon la revendication 1 ou 2, caractérisé en ce que les profilés creux oblongs (4, 10) sont reliés à des raccords d'angles (14) formant un assemblage à surface plane et aptes à être emboîtés dans lesdits profilés creux (4, 10), dont la section transversale, par rapport à l'axe longitudinal des profilés creux (4) destinés à couvrir les bords latéraux du radiateur à plaques, présente une forme coudée correspondant au contour extérieur de la section transversale de ces profilés creux coudés (4), dont la section transversale, par rapport à l'axe longitudinal des profilés creux (10) destinés à couvrir les bords supérieur et inférieur du radiateur à plaques, est conçue en fonction du contour extérieur de la section transversale de ces profilés creux (10), et dont les angles (41) sont arrondis en fonction des parties arrondies des profilés oblongs.

FIG.1

FIG.2